# EUROPEAN PATENT APPLICATION

(11) **EP 4 227 774 A1**
(43) Date of publication of application: **16.08.2023**
(21) Application number: 23152208.7
(22) Date of filing: 18.01.2023
(51) Int. Cl.: G06F 3/01, G06F 3/0346, G06F 3/0354

(54) **SYSTEMS AND METHODS FOR USING INPUT DEVICE IN DIFFERENT MODES**

(30) Priority: 09.02.2022 US 202217667972
(71) Applicant: Varjo Technologies Oy, 00100 Helsinki (FI)
(72) Inventor: Peuhkurinen, Ari, 00120 Helsinki (FI)
(74) Representative: Moosedog Oy

(57) **Abstract**

Disclosed is system (100) comprising: user device(s) (102, 202) providing user with user interface; input device (104, 200); and sensor(s) (106). Processor (108) of user device(s) is configured to: identify surface (208) of object (210) and determine pose of user's hand (212) and input device; determine first distance and second distance; determine whether input device is in contact with: user's hand, surface of object, or both user's hand and surface. When input device is in contact with surface or both user's hand and surface, processor is configured to control input device to operate in first mode. When input device is in contact with user's hand, processor is configured to control input device to operate in second mode. System enables user to interact with user interface by operating input device as computer mouse during first mode and as six-degrees-of-freedom controller during second mode.

## Description

### TECHNICAL FIELD

The present disclosure relates to systems for using input devices in different modes. The present disclosure also relates to methods for using input devices in different modes.

### BACKGROUND

In recent times, immersive extended-reality (XR) technologies such as virtual-reality (VR), augmented-reality (AR), mixed-reality (MR) are being employed in various fields such as entertainment, real estate, training, medical imaging operations, simulators, navigation, and the like. Such immersive XR technologies create immersive XR environments for presentation to a user of an XR device (such as an XR headset, a pair of XR glasses, or similar).

Generally, users interact with the immersive XR environments by way of multiple specialized interaction controllers such as joysticks, remote controllers, computer mice, simulated reality consoles, and the like. In particular, a given interaction controller provides a limited range of interaction functionality to a user. For example, a remote controller allows the user to interact with the simulated environment by way of pressing buttons only.

Presently, in order to fully interact with an XR environment, a user uses multiple interaction controllers simultaneously, i.e., separate interaction controllers are required by the user to interact with the XR environments. In an example, the user may interact with a given virtual-reality game environment using a remote controller and a computer mouse. However, the use of multiple interaction controllers makes such interactions quite complicated and difficult. Typically, the user is required to manually changeover from using one interaction controller to another, whilst engaging with the XR environment. This requires considerable effort on part of the user, which leads to suboptimal immersion of the user whilst he/she performs said manual changeover. Nowadays, some hybrid interaction controllers (i.e., a single interaction controller with multiple interaction functionalities) are being designed and employed for users to interact with XR environments. Such hybrid interaction controllers employ various types of sensors, for example, such as proximity sensors, light sensors and image sensors. This makes such controllers complex, bulky and expensive.

Therefore, in light of the foregoing discussion, there exists a need to overcome the aforementioned drawbacks associated with existing interaction controllers for interacting with user interface provided by user devices associated with users.

### SUMMARY

The present disclosure seeks to provide a system for using an input device in different modes. The present disclosure also seeks to provide a method for using an input device in different modes. An aim of the present disclosure is to provide a solution that overcomes at least partially the problems encountered in prior art.

In one aspect, an embodiment of the present disclosure provides a system comprising:
at least one user device that, in operation, provides a user with a user interface;
an input device communicably coupled to the at least one user device; and
at least one sensor arranged in a real-world environment whereat the input device is present,
wherein a processor of the at least one user device is configured to:
   - process sensor data, collected by the at least one sensor, to identify a plane representing a surface of a given object and to determine a pose of a user's hand and a pose of the input device;
   - determine a first distance between the input device and the user's hand and a second distance between the input device and the surface of the given object, based on the identified plane, the pose of the user's hand and the pose of the input device;
   - determine, based on the first distance and the second distance, whether the input device is in contact with:
      - the user's hand only,
      - the surface of the given object only, or
      - both the user's hand and the surface;
   - when it is determined that the input device is in contact with the surface of the given object only or both the user's hand and the surface, control the input device to operate in a first mode of operation; and
   - when it is determined that the input device is in contact with the user's hand only, control the input device to operate in a second mode of operation,
wherein the system enables the user to interact with the user interface by operating the input device as a computer mouse during the first mode of operation and as a six-degrees-of-freedom controller during the second mode of operation.

In another aspect, an embodiment of the present disclosure provides a method comprising:
- processing sensor data, collected by at least one sensor arranged in a real-world environment whereat an input device is present, for identifying a plane representing a surface of a given object and for determining a pose of a user's hand and a pose of the input device;
- determining a first distance between the input device and the user's hand and a second distance between the input device and the surface of the given object, based on the identified plane, the pose of the user's hand and the pose of the input device;
- determining, based on the first distance and the second distance, whether the input device is in contact with:
   - the user's hand only,
   - the surface of the given object only, or
   - both the user's hand and the surface;
- when it is determined that the input device is in contact with the surface of the given object only or both the user's hand and the surface, controlling the input device to operate in a first mode of operation; and
- when it is determined that the input device is in contact with the user's hand only, controlling the input device to operate in a second mode of operation,
wherein the input device is operated as a computer mouse during the first mode of operation and as a six-degrees-of-freedom controller during the second mode of operation, for enabling a user to interact with a user interface provided by at least one user device, the at least one user device being communicably coupled to the input device.

Embodiments of the present disclosure substantially eliminate or at least partially address the aforementioned problems in the prior art, and enable an existing input device to be operated in different modes to provide the user with multiple interaction functionalities.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 illustrates a block diagram of architecture of a system, in accordance with an embodiment of the present disclosure;
FIGs. 2A, 2B, and 2C illustrate exemplary scenarios of operating an input device in different modes, in accordance with an embodiment of the present disclosure; and
FIGs. 3A and 3B illustrate steps of a method, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system comprising:
at least one user device that, in operation, provides a user with a user interface;
an input device communicably coupled to the at least one user device; and
at least one sensor arranged in a real-world environment whereat the input device is present,
wherein a processor of the at least one user device is configured to:
   - process sensor data, collected by the at least one sensor, to identify a plane representing a surface of a given object and to determine a pose of a user's hand and a pose of the input device;
   - determine a first distance between the input device and the user's hand and a second distance between the input device and the surface of the given object, based on the identified plane, the pose of the user's hand and the pose of the input device;
   - determine, based on the first distance and the second distance, whether the input device is in contact with:
      - the user's hand only,
      - the surface of the given object only, or
      - both the user's hand and the surface;
   - when it is determined that the input device is in contact with the surface of the given object only or both the user's hand and the surface, control the input device to operate in a first mode of operation; and
   - when it is determined that the input device is in contact with the user's hand only, control the input device to operate in a second mode of operation,
wherein the system enables the user to interact with the user interface by operating the input device as a computer mouse during the first mode of operation and as a six-degrees-of-freedom controller during the second mode of operation.

In another aspect, an embodiment of the present disclosure provides a method comprising:
- processing sensor data, collected by at least one sensor arranged in a real-world environment whereat an input device is present, for identifying a plane representing a surface of a given object and for determining a pose of a user's hand and a pose of the input device;
- determining a first distance between the input device and the user's hand and a second distance between the input device and the surface of the given object, based on the identified plane, the pose of the user's hand and the pose of the input device;
- determining, based on the first distance and the second distance, whether the input device is in contact with:
   - the user's hand only,
   - the surface of the given object only, or
   - both the user's hand and the surface;
- when it is determined that the input device is in contact with the surface of the given object only or both the user's hand and the surface, controlling the input device to operate in a first mode of operation; and
- when it is determined that the input device is in contact with the user's hand only, controlling the input device to operate in a second mode of operation,
wherein the input device is operated as a computer mouse during the first mode of operation and as a six-degrees-of-freedom controller during the second mode of operation, for enabling a user to interact with a user interface provided by at least one user device, the at least one user device being communicably coupled to the input device.

The present disclosure provides the aforementioned system and method for using an input device in different modes. Herein, based on the first distance (i.e., a distance between the input device and the user's hand) and the second distance (i.e., a distance between the input device and the surface of the given object), the input device acts as the computer mouse or the six-degrees-of-freedom controller. Beneficially, this eliminates requirement of using multiple/separate interaction controllers for interacting with the user interface of the at least one user device, because any conventional, existing input device can be employed in the system and method. Moreover, using a single input device in different modes does not require manual changeover whilst switching between different modes of operation. This reduces an effort on part of the user for interacting with the user interface. Since the at least one sensor is arranged (externally) in the real-world environment, the input device is light-weight and not expensive as any conventional input device could be easily used in the system. Furthermore, the system enables automatic switching of modes of operation of the input device. Therefore, the input device allows for a seamless interaction between the user and the user interface in real time or near-real time, thereby providing, for example, an immersive and realistic XR experience. The system is simple, user-friendly, and robust. The method is fast, effective, reliable and can be implemented with ease.

Throughout the present disclosure, the term *"user device"* refers to a device that provides the user with the user interface. Optionally, the at least one user device comprises a device with a display screen. Such a user device can be, for example, a laptop, a computer, a television, or similar. Additionally or alternatively, optionally, the at least one user device comprise a head-mounted display (HMD) device. The term *"head-mounted display"* refers to a specialized equipment that is configured to present an XR environment to the user when said HMD device, in operation, is worn by the user on his/her head. The HMD device is implemented, for example, as an XR headset, a pair of XR glasses, and the like, that is operable to display a visual scene of the XR environment to the user. The term *"user interface"* refers to a space that allows for interaction between the user and the at least one user device. The user interface is generally rendered upon the display screen of the at least one user device. The user interacts with the user interface, via the input device.

Throughout the present disclosure, the term *"input device"* refers to a hardware that is to be used by the user to provide an input to the at least one user device in order to control (namely, interact with) the at least one user device. It will be appreciated that the input device could be any object having a small form factor, for example, a computer mouse, a commonly-used object (such as a soft drink can, a gadget, and the like), or similar. Throughout the present disclosure, the term *"sensor"* refers to a specialized equipment that is employed to detect and/or follow at least one surface of the given object, poses of the user's hand, and poses of the input device. The term *"pose"* encompasses both position and orientation. It will be appreciated that the given object refers to any object present in the real-world environment that is in vicinity of the input device. The given object can be, for example, a table top, a mouse pad, a stand for the input device, a note-book, or similar. In some implementations, the at least one sensor is arranged on the at least one user device. In other words, the at least one user device comprises the at least one sensor. As an example, the at least one sensor may be arranged on a laptop, an HMD device, or both the laptop and the HMD device. In other implementations, the at least one sensor is arranged externally to the at least one user device within the real-world environment.

Optionally, the at least one sensor is implemented as at least one of: an image sensor, a depth sensor. The term *"image sensor"* refers to a sensor that is operable to detect and process signals, such as visible-light signals or infrared signals, received from the real-world environment, so as to capture a given image of the real-world environment. The given image represents objects present in the real-world environment (comprising at least one of: the given object, the user's hand, the input device) as well as features of the objects. Examples of the image sensor include, but are not limited to, a charge-coupled device (CCD) image sensor, a complementary metal-oxide-semiconductor (CMOS) image sensor.

Furthermore, the term *"depth sensor"* refers to a sensor that is operable to at least detect optical depths of the objects in the real-world environment, for use in generating a given depth image of the real-world environment. The given depth image represents an optical depth of at least one of: the given object, the user's hand, the input device, present in the real-world environment. The given depth image also represents the features of the objects, in addition to the optical depth. Optionally, the given depth image is a two-dimensional (2D) depth image or a 3D depth image. The depth sensor may be implemented as a light-based depth sensor, a sound-based depth sensor, or similar.

Optionally, the image sensor is a part of a visible-light camera. Optionally, the depth sensor is a part of a depth camera. The visible-light camera and/or the depth camera could be arranged on the HMD device worn by the user on his/her head, or could be arranged anywhere in the real-world environment where the user and the input device are present. Examples of the visible-light camera include, but are not limited to, a Red-Green-Blue (RGB) camera, a Red-Green-Blue-Alpha (RGB-A) camera, and a monochrome camera. Examples of the depth camera include, but are not limited to, a Red-Green-Blue-Depth (RGB-D) camera, a stereo camera, a ranging camera, a Light Detection and Ranging (LiDAR) camera, a flash LiDAR camera, a Time-of-Flight (ToF) camera, a laser rangefinder, a plenoptic camera, an infrared (IR) camera. In an example implementation, the visible-light camera and the depth camera are integrated as a single camera, such as the RGB-D camera.

Optionally, the sensor data comprises at least one of: a plurality of visible-light images, a plurality of depth images, a plurality of phase images. Optionally, the sensor data is indicative of at least one of: a presence or an absence of the given object, a presence or an absence of the input device, a presence or an absence of the user's hand, a pose of the plane representing the surface of the given object, the pose of the input device, the pose of the user's hand. In this regard, when the sensor data comprises the plurality of depth images, the processor can accurately determine how a plurality of elements (such as the given object, the input device, and the user's hand, or similar) are arranged (namely, positioned) in the real-world environment with respect to the depth sensor, by utilizing optical depths of the plurality of elements. Furthermore, when a given element from amongst the plurality of elements has a specific orientation (i.e., arranged at an angle) with respect to the depth sensor, different edges and/or surfaces of the given element may have different optical depths. Thus, the processor can accurately and readily determine how the given element is oriented with respect to the depth sensor.

Optionally, when processing the sensor data, the processor is configured to employ at least one of: an image processing technique, a data processing technique, an object detection technique, an object recognition technique, a feature detection technique, a data extrapolation technique. Such techniques are well-known in the art. It will be appreciated that any of the aforesaid techniques could be based on artificial intelligence (AI).

Notably, the processor of the at least one user device is communicably coupled with the at least one sensor and the input device wirelessly and/or in a wired manner. The processor controls operation of the input device, causing the input device to operate in the first mode of operation or the second mode of operation.

Furthermore, the processor determines the first distance and the second distance for ascertaining whether the input device is in contact with the user's hand only, the surface of the given object only, or both the user's hand and the surface. Once the plane representing the surface of the given object is identified, the processor optionally determines positional coordinates of points lying on the surface of the given object. Moreover, positional coordinates of the user's hand and positional coordinates of the input device are accurately known to the processor, as the pose of the user's hand and the pose of the input device are determined. In this regard, the processor easily and accurately determines the first distance by utilizing the positional coordinates of the input device and the positional coordinates of the user's hand, and determines the second distance by utilizing the positional coordinates of the points lying on the surface of the given object and the positional coordinates of the input device. Optionally, when determining the first distance and the second distance, the processor is configured to employ at least one mathematical technique. Such a mathematical technique may be based on coordinate geometry.

Once the first distance and the second distance are determined, the processor can easily and accurately ascertain whether the input device is in contact with the user's hand only, the surface of the given object only, or both the user's hand and the surface. Optionally, the input device is determined to be in contact with the user's hand when the first distance lies in a range of 0 centimetre to 5 centimetres. More optionally, the input device is determined to be in contact with the user's hand when the first distance lies in a range of 0 centimetre to 2 centimetres. As an example, the input device is determined to be in contact with the user's hand when the first distance may be from 0, 0.5, 1 or 2 centimetres up to 2, 3 or 5 centimetres. Furthermore, optionally, the input device is determined to be in contact with the surface of the given object when the second distance lies in a range of 0 centimetre to 5 centimetres. More optionally, the input device is determined to be in contact with the surface of the given object when the second distance lies in a range of 0 centimetre to 2 centimetres. As an example, the input device is determined to be in contact with the surface when the second distance may be from 0, 0.5, 1 or 2 centimetres up to 2, 3 or 5 centimetres.

Notably, when operated in the first mode of operation, the input device acts as the computer mouse for interacting with the user interface by way of pointing, clicking, drag and drop, or any other functionality provided by the computer mouse. When operated in the second mode of operation, the input device acts as the six-degrees-of-freedom controller for interacting with the user interface by way of making hand gestures, hand movements, translations, rotations, and like. Moreover, in the second mode of operation, the functionalities provided by existing buttons of the input device are optionally switched to provide typical functionalities of a conventional XR controller. It will be appreciated that when the input device is operated to act as the computer mouse, the user may provide his/her input by simply moving the input device over the surface of the given object and clicking one or more buttons of the input device. Moreover, when the input device is operated in the second mode of operation to act as the six-degrees-of-freedom controller, the user may hold the input device in his/her hand(s) and move it freely in a 3D space of the real-world environment whereat the user is present.

Thus, the aforesaid manner of using the input device eliminates any requirement of using multiple/separate interaction controllers for interacting with the user interface of the at least one user device. Moreover, beneficially, using a single input device in different modes does not require manual changeover whilst switching between different modes of operation. This reduces an effort on part of the user for interacting with the user interface. Furthermore, the system enables automatic switching of modes of operation of the input device. Therefore, the input device allows for a seamless interaction between the user and the at least one user device in real time or near-real time, thereby providing, for example, an immersive and realistic XR experience.

Optionally, the processor is configured to switch the input device from the first mode of operation to the second mode of operation, when it is determined that the input device is in contact with the user's hand only for at least a predefined time period. In this regard, the switching is implemented only when the input device is repeatedly (namely, continuously) in contact with the user's hand only for at least the predefined time period. It will be appreciated that when the input device is only instantaneously (namely, abruptly) in contact with the user's hand only (i.e., when the time period during which the input device is in contact with the user's hand only is less than the predefined time period), the input device would not be switched from the first mode to the second mode.

Optionally, the processor is configured to switch the input device from the second mode of operation to the first mode of operation, when it is determined that the input device is in contact with the surface of the given object only or both the user's hand and the surface for at least a predefined time period. In this regard, the switching is implemented only when the input device is repeatedly in contact with the surface of the given object only or both the user's hand and the surface for at least the predefined time period. It will be appreciated that when the input device is only instantaneously in contact with the surface only or both the user's hand and the surface, the input device would not be switched from the second mode to the first mode.

Optionally, the predefined time period lies in a range of 100 milliseconds to 2000 milliseconds. As an example, the predefined time period may be from 100, 200, 500, 1000 milliseconds up to 500, 1000, 1500 or 2000 milliseconds. It will be appreciated that such a predefined time period allows for a seamless transition from a current mode of operation (from which the input device is switching) to an upcoming mode of operation (to which the input device is switching). Beneficially, this eliminates possible abruptness in a functionality of the input device while transitioning from the current mode of operation to the upcoming mode of operation. A value of the predefined time period is beneficially selected in a manner that there would neither be any unwanted instantaneous switching nor be any latency (namely, lag) in switching. In an example, when the input device is in contact with both the user's hand and the surface for 600 milliseconds, the input device may be switched from the second mode of operation to the first mode of operation.

The present disclosure also relates to the method as described above. Various embodiments and variants disclosed above, with respect to the aforementioned first aspect, apply *mutatis mutandis* to the method.

Optionally, in the method, the input device is determined to be in contact with the user's hand when the first distance lies in a range of 0 centimetre to 5 centimetres.

Optionally, in the method, the input device is determined to be in contact with the surface of the given object when the second distance lies in a range of 0 centimetre to 5 centimetres.

Optionally, the method further comprises switching the input device from the first mode of operation to the second mode of operation, when it is determined that the input device is in contact with the user's hand only for at least a predefined time period.

Optionally, the method further comprises switching the input device from the second mode of operation to the first mode of operation, when it is determined that the input device is in contact with the surface of the given object only or both the user's hand and the surface for at least a predefined time period.

Optionally, in the method, the predefined time period lies in a range of 100 milliseconds to 2000 milliseconds.

Optionally, in the method, the at least one sensor is implemented as at least one of: an image sensor, a depth sensor.

### DETAILED DESCRIPTION OF THE DRAWINGS

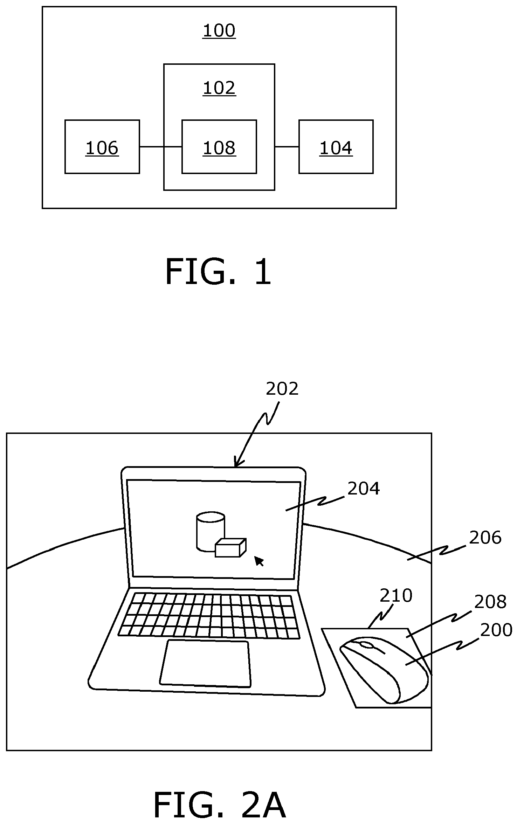

Referring to FIG. 1, illustrated is a block diagram of architecture of a system **100,** in accordance with an embodiment of the present disclosure. The system **100** comprises at least one user device (depicted as a user device **102**), an input device **104,** and at least one sensor (depicted as a sensor **106**). The input device **104** is communicably coupled to the user device **102.** A processor **108** of the user device **102** is communicably coupled to the sensor **106.**

It may be understood by a person skilled in the art that the FIG. 1 includes a simplified architecture of the system **100** for sake of clarity, which should not unduly limit the scope of the claims herein. The person skilled in the art will recognize many variations, alternatives, and modifications of embodiments of the present disclosure.

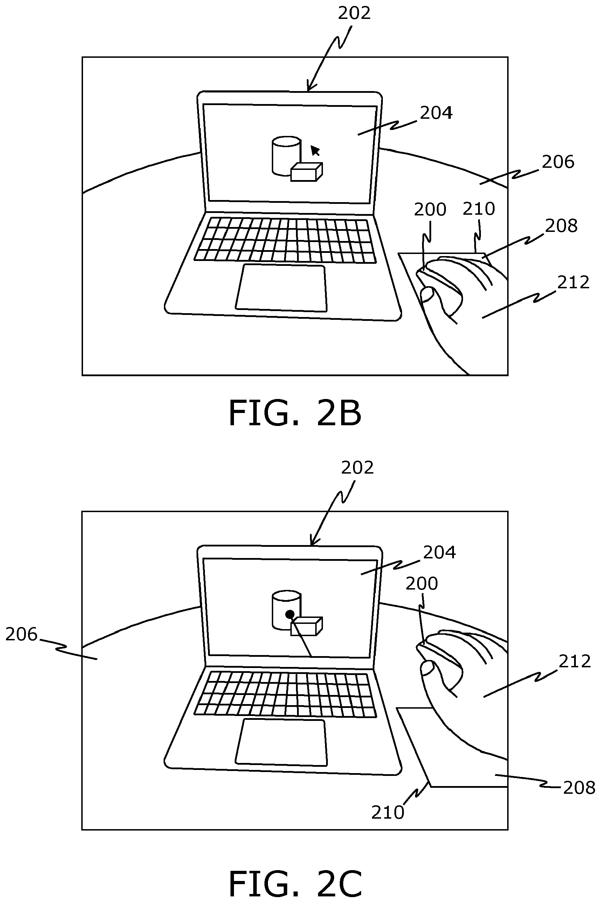

Referring to FIGs. 2A, 2B, and 2C, illustrated are exemplary scenarios of operating an input device **200** in different modes, in accordance with an embodiment of the present disclosure. The input device **200** is communicably coupled to a user device **202** (for example, depicted as a laptop). The user device provides a user (not shown) with a user interface, for example, as shown on a display screen **204** of the user device **202.** The user device **202** is shown to be placed on a table top **206.**

In FIG. 2A, the input device **200** is in contact with a surface **208** of an object **210** (depicted as a mouse pad placed on the table top **206**) only. In FIG. 2B, the input device **200** is in contact with both the surface **208** of the object **210** and a user's hand **212.** As per the example scenarios shown in FIGs. 2A and 2B, the input device **200** is controlled to operate in a first mode of operation, i.e., the input device **200** is operated (namely, used) as a computer mouse, for enabling the user to interact with the user interface.

In FIG. 2C, the input device **200** is in contact with the user's hand **212** only i.e., the input device **200** is held in air by the user's hand **212.** As per the example scenario shown in FIG. 2C, the input device **200** is controlled to operate in a second mode of operation, i.e., the input device **200** is operated as a six-degrees-of-freedom controller, for enabling the user to interact with the user interface.

It may be understood by a person skilled in the art that the FIGs. 2A-2C are merely examples, which should not unduly limit the scope of the claims herein. The person skilled in the art will recognize many variations, alternatives, and modifications of embodiments of the present disclosure.

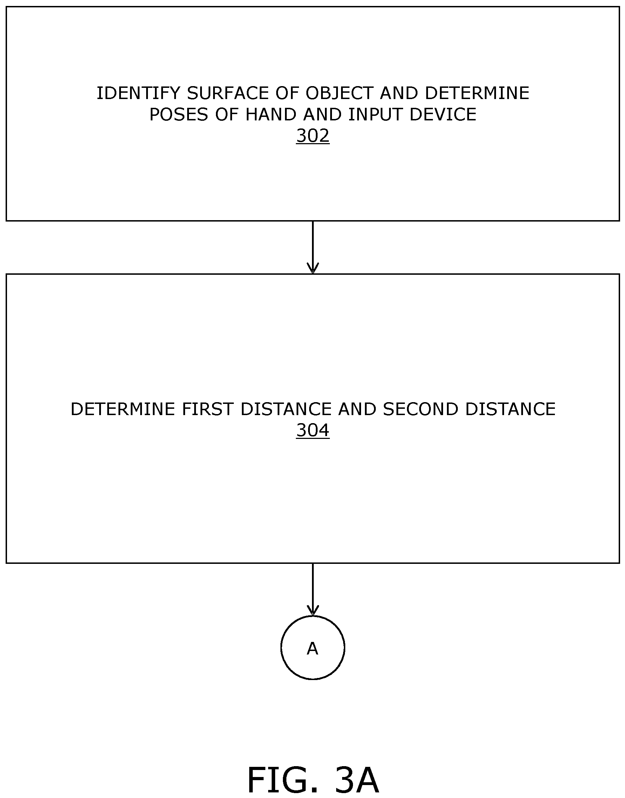

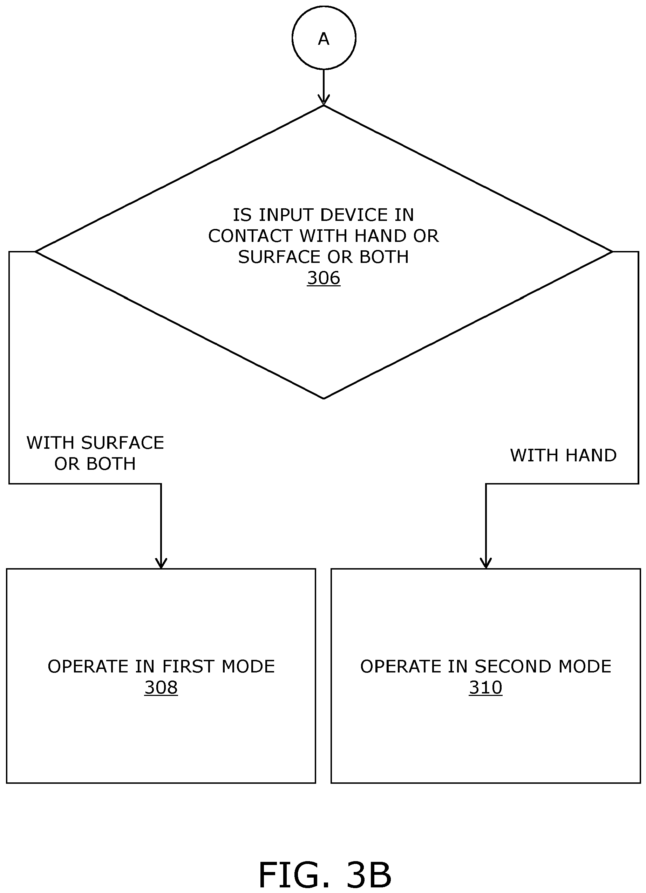

Referring to FIGs. 3A and 3B, illustrated are steps of a method for using an input device in different modes, in accordance with an embodiment of the present disclosure. At step **302,** sensor data collected by at least one sensor, arranged in a real-world environment whereat an input device is present, is processed for identifying a plane representing a surface of a given object and for determining a pose of a user's hand and a pose of the input device. At step **304,** a first distance between the input device and the user's hand and a second distance between the input device and the surface of the given object are determined, based on the identified plane, the pose of the user's hand and the pose of the input device. At step **306,** it is determined whether the input device is in contact with: the user's hand only, the surface of the given object only, or both the user's hand and the surface, based on the first distance and the second distance. When it is determined that the input device is in contact with the surface of the given object only or both the user's hand and the surface, at step **308,** the input device is controlled to operate in a first mode of operation. Otherwise, when it is determined that the input device is in contact with the user's hand only, at step **310,** the input device is controlled to operate in a second mode of operation. Notably, the input device is operated as a computer mouse during the first mode of operation and as a six-degrees-of-freedom controller during the second mode of operation, for enabling a user to interact with a user interface provided by at least one user device, the at least one user device being communicably coupled to the input device.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) comprising:
at least one user device (102, 202) that, in operation, provides a user with a user interface;
an input device (104, 200) communicably coupled to the at least one user device; and
at least one sensor (106) arranged in a real-world environment whereat the input device is present,
wherein a processor (108) of the at least one user device is configured to:
- process sensor data, collected by the at least one sensor, to identify a plane representing a surface (208) of a given object (210) and to determine a pose of a user's hand (212) and a pose of the input device;
- determine a first distance between the input device and the user's hand and a second distance between the input device and the surface of the given object, based on the identified plane, the pose of the user's hand and the pose of the input device;
- determine, based on the first distance and the second distance, whether the input device is in contact with:
- the user's hand only,
- the surface of the given object only, or
- both the user's hand and the surface;
- when it is determined that the input device is in contact with the surface of the given object only or both the user's hand and the surface, control the input device to operate in a first mode of operation; and
- when it is determined that the input device is in contact with the user's hand only, control the input device to operate in a second mode of operation,
wherein the system enables the user to interact with the user interface by operating the input device as a computer mouse during the first mode of operation and as a six-degrees-of-freedom controller during the second mode of operation.

2. The system (100) of claim 1, wherein the input device (104, 200) is determined to be in contact with the user's hand (212) when the first distance lies in a range of 0 centimetre to 5 centimetres.

3. The system (100) of claim 1 or 2, wherein the input device (104, 200) is determined to be in contact with the surface (208) of the given object (210) when the second distance lies in a range of 0 centimetre to 5 centimetres.

4. The system (100) of any of the preceding claims, wherein the processor (108) is configured to switch the input device (104, 200) from the first mode of operation to the second mode of operation, when it is determined that the input device is in contact with the user's hand (212) only for at least a predefined time period.

5. The system (100) of any of the preceding claims, wherein the processor (108) is configured to switch the input device (104, 200) from the second mode of operation to the first mode of operation, when it is determined that the input device is in contact with the surface (208) of the given object (210) only or both the user's hand (212) and the surface for at least a predefined time period.

6. The system (100) of claim 4 or 5, wherein the predefined time period lies in a range of 100 milliseconds to 2000 milliseconds.

7. The system (100) of any of the preceding claims, wherein the at least one sensor (106) is implemented as at least one of: an image sensor, a depth sensor.

8. A method comprising:
- processing sensor data, collected by at least one sensor (106) arranged in a real-world environment whereat an input device (104, 200) is present, for identifying a plane representing a surface (208) of a given object (210) and for determining a pose of a user's hand (212) and a pose of the input device;
- determining a first distance between the input device and the user's hand and a second distance between the input device and the surface of the given object, based on the identified plane, the pose of the user's hand and the pose of the input device;
- determining, based on the first distance and the second distance, whether the input device is in contact with:
- the user's hand only,
- the surface of the given object only, or
- both the user's hand and the surface;
- when it is determined that the input device is in contact with the surface of the given object only or both the user's hand and the surface, controlling the input device to operate in a first mode of operation; and
- when it is determined that the input device is in contact with the user's hand only, controlling the input device to operate in a second mode of operation,
wherein the input device is operated as a computer mouse during the first mode of operation and as a six-degrees-of-freedom controller during the second mode of operation, for enabling a user to interact with a user interface provided by at least one user device (102, 202), the at least one user device being communicably coupled to the input device.

9. The method of claim 8, wherein the input device (104, 200) is determined to be in contact with the user's hand (212) when the first distance lies in a range of 0 centimetre to 5 centimetres.

10. The method of claim 8 or 9, wherein the input device (104, 200) is determined to be in contact with the surface (208) of the given object (210) when the second distance lies in a range of 0 centimetre to 5 centimetres.

11. The method of any of claims 8-10, further comprising switching the input device (104, 200) from the first mode of operation to the second mode of operation, when it is determined that the input device is in contact with the user's hand (212) only for at least a predefined time period.

12. The method of any of claims 8-11, further comprising switching the input device (104, 200) from the second mode of operation to the first mode of operation, when it is determined that the input device is in contact with the surface (208) of the given object (210) only or both the user's hand (212) and the surface for at least a predefined time period.

13. The method of claim 11 or 12, wherein the predefined time period lies in a range of 100 milliseconds to 2000 milliseconds.

14. The method of any of claims 8-13, wherein the at least one sensor (106) is implemented as at least one of: an image sensor, a depth sensor.
